# EUROPEAN PATENT SPECIFICATION

(11) **EP 1 327 470 B1**
(45) Date of publication and mention of the grant of the patent: **31.08.2005**
(21) Application number: 02079570.4
(22) Date of filing: 31.10.2002
(51) Int. Cl.: B01D 33/06, B01D 33/067, B01D 33/073

(54) **Rotary drum filter**
Rotierendes Trommelfilter
Tambour filtrant rotatif

(30) Priority: 07.12.2001 IT TV20010159
(43) Date of publication of application: 16.07.2003
(73) Proprietor: Bellussi, Antoni Paolo, 31015 Conegliano (TV) (IT); Zilio, Maurizio, 31030 Altivole (TV) (IT)
(72) Inventor: Bellussi, Antoni Paolo, 31015 Conegliano (TV) (IT); Zilio, Maurizio, 31030 Altivole (TV) (IT)
(74) Representative: Dalla Rosa, Adriano

(56) References cited:
- CH-A- 314 312
- DE-A- 3 806 582
- FR-A- 1 136 158
- GB-A- 1 086 619
- US-A- 4 407 720

## Description

The largest type of vacuum filter is rotary drum vacuum filter with multiply compartments.

From CH 314312 A is known a rotary drum filter with a cylindrical drum with an open side, which rotates immersed in a basin containing the liquid to be filtered, and this liquid is sucked through a suction conduit from the internal and external surface of the drum envelope, and this envelope is provided with various axial pipes entering a drum side wall, which are covered by filtering clothes, and the suction conduit is divided into different zones. When the drum rotates slowly, the liquid to be filtered is sucked through the pipes and the filtering clothes, and the filtrated liquid is separated from the solid product, which remains attached to the drum internal and external surface and is detaches by a scraper therefrom, and is discharged outside through a rotating conveyor screw.
The present invention relates to a rotary drum filter made in a manner different than that disclosed by CH 314312 A.

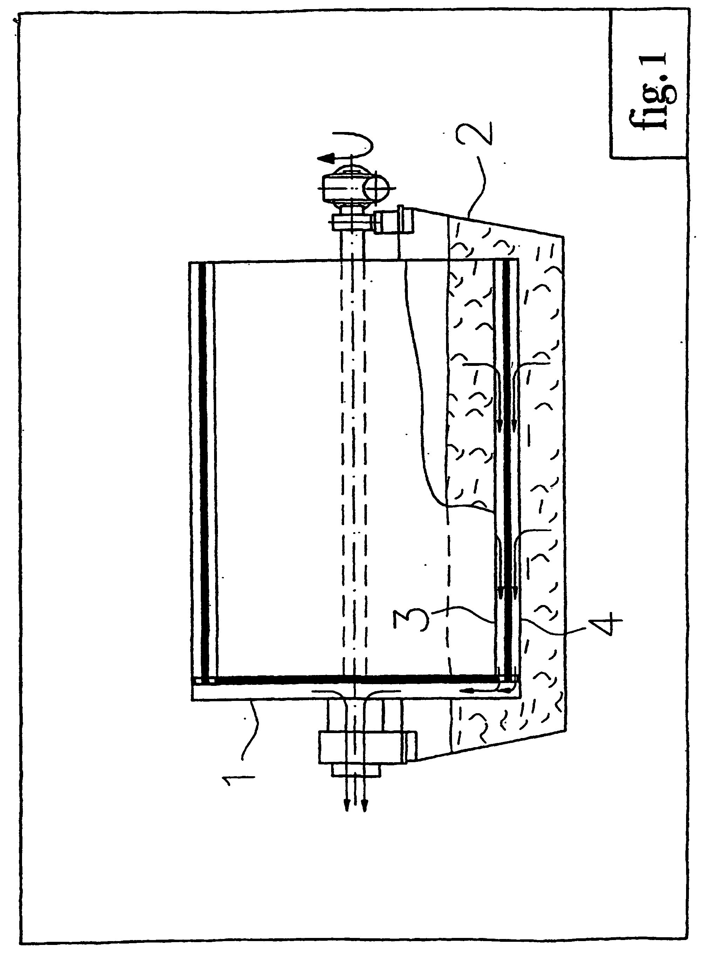

Object of this invention is a vacuum filter of rotary drum type with one open side, with parallel suction to the filtration surface (fig.1).

Observing the fig.1, the cylindrical drum (1) of our invention in opened on one side and therefore it is not subject to the hydrostatic force (Archimedean principle) of the liquid in the feeding basin (2).

With the filter of our invention the parallel suction along the filtering surface allows the filtration on the both surfaces of the drum, the internal one (3) and the external one (4) (this is possible because the rotary drum has one opened side).

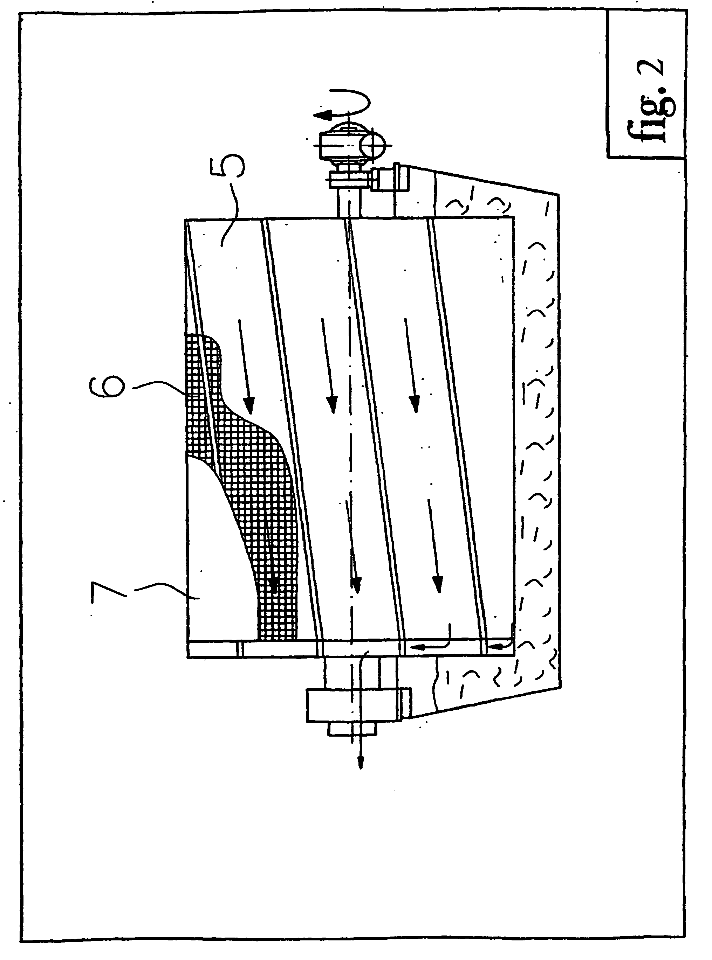

In fig.2 the cylinder has longitudinal independent sections (5) by means of parallel borders which are opportunely inclined with an angle to 30° degrees to facilitate, during the drum revolution, the draining and conveying of the filtrate product.

The mentioned sections generate a parallel series of rectangular channels for the filtrate collection; along every longitudinal section (5) a grid is installed (6) which supports the permeable membrane (7) covering the internal and external surfaces of the cylindrical drum; this membrane is the filtering element.

It is made of organic polymeric compound having the characteristic to be extremely polished for granting the complete and total cleaning during the drum revolution and with a permeability only to liquids and not to solids.

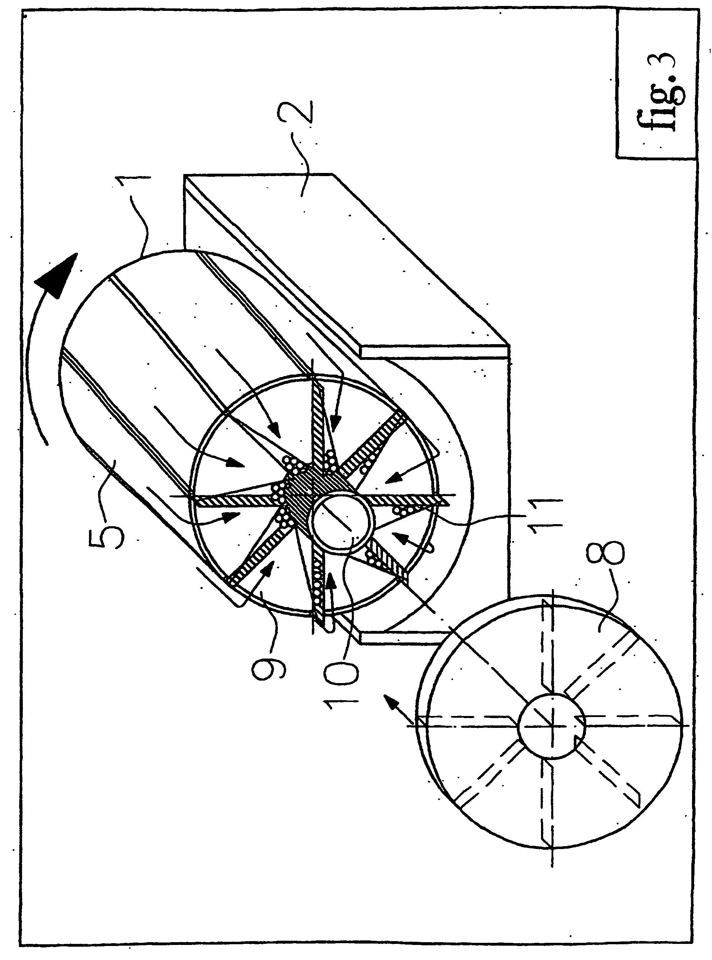

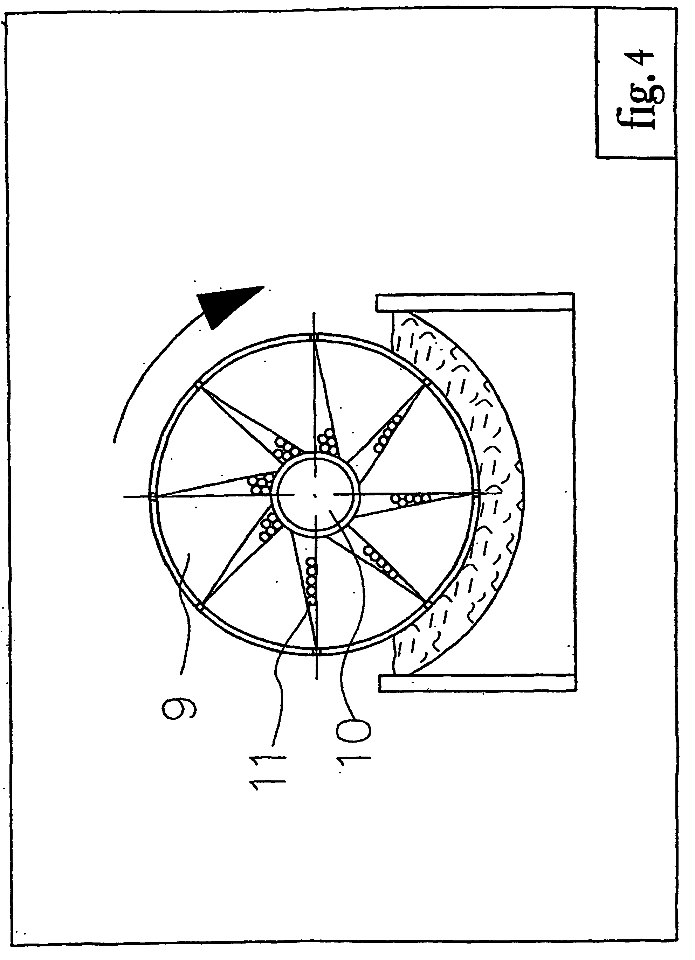

How we can see in fig.3 and fig.4 an opportunely shaped structure (8) placed at least in one side of the cylindrical drum has the function to join the longitudinal sections (5) with a proportional variable suction valve, composed by a series of triangular sectors (9), converging the filtration product to a central suction collector (10).

This valve is necessary to govern and optimising the vacuum. Inside each sector (9) there are spherical balls (11) in variable number and with calibrated diameter made in polymeric material. These spherical balls follow the rotation of cylindrical drum (1) along its horizontal axis: these balls do not close the suction way (10) during the immersion of the drum in the feeding basin (2) (phase of product's suction) that requires a maximal suction; instead these balls are self orienting in a way to reduce proportionally the suction area during the revolution of the drum, outside the feeding basin (phase of drainage of the filtrate liquid).

These spherical balls (11) allow the reduction of suction strength (proportionally during the drum rotation) in the part of the drum surface not immersed inside the feeding basin, because in this phase is necessary a lower suction. In this way the filtration process is optimised to the best condition of suction in an absolutely easy and automatic manner.

This is very important because cuts down the vacuum loss when the drum outside the feeding basin, and requiring a lower volume of sucked fluids that allows to reduce the request of energy and therefore electrical power for the filtration, meaning a low cost of equipment.

The liquid suction is obtained by a high specific flow vacuum system like a blower (centrifugal depressor) or a volumetric pump joined, or not, to a single or multiple ejector. Usually the blower is preferred because, through the above mentioned proportional variable suction valve, lower value of vacuum is required for the suction.

This vacuum system can be joined to an ejector in the vacuum line for increasing the performance of the blower and obtaining a higher vacuum value at the same installed power.

The ejector, at the same amount of sucked product, allows higher power efficiency and consequently a good energy saving with a better performance of the machine.

The ejector has furthermore the peculiarity of reducing the temperature of the sucked products (more than of carrier of liquids) lowering the liquid vapour's tension and foam generation.

As previously mentioned, in the present invention a special permeable membrane (7) made of synthetic material of proportionate pore size covers the surface of drum: the cleaning of that membrane is made thanks to a device as a brushing roll, or a scraping roll made of spongy material; this roll can be either fixed or rotating one.

Anyway it will be available to use small amount of filter aids mixed with the product to be filtered inside the feeding basin (2).

## Claims

1. Vacuum filter of rotary drum type, comprising a rotary cylindrical drum (1) with at least one open side, provided with an inner surface (3) and an outer surface (4) and immersed in a liquid to be filtered contained in a feeding basin (2), and comprising a high specific flow vacuum system like a blower or a volumetric pump, for sucking the liquids parallely to the filtering surface and for filtering them through the internal (3) and external surface (4) of said cylindrical drum (1), said cylinder having longitudinal independent sections (5) by means of parallel borders, which sections generate a parallel series of rectangular channels for the filtrate collections, and a grid (6) being installed along every longitudinal section (5), which supports the permeable membrane (7) as filtering element covering said internal (3) and external surface (4) of said cylindrical drum (1), which membrane is made of polymeric compound with the characteristic to be extremely polished for the cleaning during the drum revolution and with a permeability only to liquids and not to solids, an opportunely shaped structure (8) being placed at least in one side of said cylindrical drum (1), **characterized in that** said shaped structure (8) has the function to join said longitudinal sections (5) with a proportional variable suction valve, constituted by a series of triangular sectors (9) converging to a central suction collector (10), inside each sector (9) being provided spherical balls (11) made of polymeric material, in variable number and with calibrated diameter, said balls (11) following the rotation of said cylindrical drum (1) in a way do not close the suction way of said central collector (10) during the immersion of said drum (1) into said feeding basin (2) in the phase of product suction, requiring a maximal suction, and to reduce proportionally, during the revolution of said drum (1), the suction area in the part of drum surface not immersed inside said feeding basin (2), in which a lower suction is necessary.

2. Vacuum filter according to claim 1, **characterized in that** said borders are inclined, to facilitate during the drum revolution the draining and conveying of the filtrate product.

3. Vacuum filter according to claim 1, **characterized in that** an ejector can be joined to said vacuum system, in the vacuum line, for increasing the performance of the blower and obtaining a higher vacuum value.

## Patentansprüche

1. Vakuumfilter vom Typ rotierender Trommel, mit einer drehbaren zylindrischen Trommel (1) mit mindestens einer offenen Seite, welche mit einer inneren Oberfläche (3) und einer äußeren Oberfläche (4) versehen ist und in einer zu filternden Flüssigkeit eingetaucht ist, die in einem Speisebassin (2) enthalten ist, und welche ein hochspezifisches Strömungsvakuumsystem umfasst, wie ein Gebläse oder eine volumetrische Pumpe, um die Flüssigkeiten parallel zu der Filteroberfläche anzusaugen und um diese durch die innere Oberfläche und die äußere Oberfläche (4) der zylindrischen Trommel zu filtern, wobei der Zylinder in Längsrichtung verlaufende unabhängige Sektionen (5) mittels paralleler Grenzen aufweist, wobei die Sektionen eine parallele Reihe rechteckiger Kanäle zum Sammeln des Filtrats erzeugen, und ein Gi tter (6) längs jeder in Längsrichtung verlauender Sektionen (5) eingebaut ist, welches die durchlässige Membrane (7) als Filterelement trägt, welches die innere Oberfläche (3) und die äußere Oberfläche (4) der zylindrischen Trommel bedeckt, wobei die Membran aus einer Polymerverbindung hergestellt ist, mit der Eigenschaft, dass sie extrem glatt ist, um die Trommel während deren Drehung zu reinigen und die eine Durchlässigkeit lediglich für Flüssigkeiten und nicht für Feststoffe aufweist, wobei ferner eine zweckdienlich geformte Struktur (8) mindestens in einer Seite der zylindrischen Trommel (1) angeordnet ist, **dadurch gekennzeichnet, dass** die geformte Struktur (8) die Funktion hat, die in Längsrichtung verlaufenden Sektionen (5) mit einem proportional variablen Saugventil zu verbinden, welches durch eine Reihe dreieckiger Sektoren (9) gebildet ist, die zu einem zentralen Saugkollektor (10) zusammenlaufen, wobei innerhalb jedes Sektors (9) kugelförmige Kugeln aus einem polymeren Material in variabler Anzahl und mit geeichtem Durchmesser vorgesehen sind, wobei die Kugeln (11) der Rotation der zylindrischen Trommel (1) in einer Weise folgen, dass sie den Saugweg des zentralen Kollektors (10) während des Eintauchens der Trommel in das Speisebassin (2) in der Phase des Ansaugens des Produktes, in der ein maximaler Sog erforderlich ist, nicht schließen, und dass sie während der Drehung der Trommel (1) proportional die Saugfläche in dem Teil der Trommeloberfläche verringern, der nicht im Inneren des Spe isebassins (2) eingetaucht ist, wobei hier ein niedrigerer Sog erforderlich ist.

2. Vakuumfilter nach Anspruch 1, **dadurch gekennzeichnet, dass** die Grenzen geneigt sind, um während der Drehung der Trommel das Entwässern und Fördern des Filtratprodukts zu erleichtern.

3. Vakuumfilter nach Anspruch 1, **dadurch gekennzeichnet, dass** ein Ejektor mit dem Vakuumsystem verbunden sein kann und zwar in der Vakuumleitung, um die Leistung des Gebläses zu erhöhen und einen höheren Vakuumwert zu erreichen.

## Revendications

1. Filtre à vide de type à tambour rotatif, comprenant un tambour cylindrique rotatif (1) avec au moins un côté ouvert, présentant une surface interne (3) et une surface externe (4) et immergé dans un liquide qui doit être filtré, contenu dans une cuve d'alimentation (2), et comprenant un système hautement spécifique de débit à vide comme, par exemple, une soufflante ou une pompe volumétrique, pour aspirer les liquides parallèlement à la surface de filtrage et pour les filtrer à travers la surface interne (3) et la surface externe (4) dudit tambour cylindrique (1), ledit cylindre présentant des sections longitudinales indépendantes (5) au moyen de bordures parallèles, lesquelles sections générent une série parallèle de canaux rectangulaires pour recueillir les filtrats, et une grille (6) étant installée le long de chaque section longitudinale (5), qui supporte la membrane perméable (7) en tant qu'un élément de filtrage recouvrant lesdites surfaces interne (3) et externe (4) dudit tambour cylindrique (1), cette membrane étant faite en un composé polymère ayant comme caractéristique d'être extrêmement poli pour assurer le nettoyage pendant la rotation du tambour et ayant une perméabilité aux liquides uniquement et non aux solides, une structure de forme adaptée (8) étant placée au moins dans un côté dudit tambour cylindrique (1), **caractérisé en ce que** ladite structure en forme (8) a pour fonction de réunir lesdites sections longitudinales (5) à une vanne proportionnelle d'aspiration à débit variable, constituée par une série de secteurs triangulaires (9) convergeant vers un collecteur d'aspiration central (10), des billes sphériques (11) faites en un matériau polymère étant prévues à l'intérieur de chaque secteur (9), qui sont en nombre variable et d'un diamètre calibré, lesdites billes (11) suivant la rotation dudit tambour cylindrique (1) de façon à ne pas fermer la voie d'aspiration dudit collecteur central (10) pendant l'immersion dudit tambour (1) dans ladite cuve d'alimentation (2) durant la phase d'aspiration de produit, nécessitant une aspiration maximale, et pour réduire proportiomellement, pendant la rotation dudit tambour (1), la zone d'aspiration dans la partie de la surface du tambour qui n'est pas immergée à l'intérieur de ladite cuve d'alimentation (2), dans laquelle une aspiration moins importante est nécessaire.

2. Filtre à vide selon la revendication 1, **caractérisé en ce que** lesdites bordures sont inclinées afin de faciliter la vidange et le transport du produit filtré, pendant la rotation du tambour.

3. Filtre à vide selon la revendication 1, **caractérisé en ce qu'**un éjecteur peut être ajouté audit système à vide, dans la canalisation de vide, afin d'augmenter les performances de la soufflante et obtenir une valeur de vide plus élevée.
